Europäisches Patentamt

European Patent Office

Office européen des brevets

(19)

(11) Publication number : **0 615 356 A1**

## (12) EUROPEAN PATENT APPLICATION

(21) Application number : 94301496.9

(22) Date of filing : 02.03.94

(51) Int. Cl.$^5$ : **H04B 10/12, H04B 10/14**

(30) Priority : 08.03.93 US 28104

(43) Date of publication of application :
14.09.94 Bulletin 94/37

(84) Designated Contracting States :
DE FR GB

(71) Applicant : AT & T Corp.
32 Avenue of the Americas
New York, NY 10013-2412 (US)

(72) Inventor : Bergano, Neal S.
11 Harvey Avenue
Lincroft, New Jersey 07738 (US)
Inventor : Li, Tingye
11 Sheraton Lane
Rumson, New Jersey 07760 (US)

(74) Representative : Watts, Christopher Malcolm
Kelway, Dr. et al
AT&T (UK) Ltd.
5, Mornington Road
Woodford Green Essex, IG8 0TU (GB)

(54) Technique for reducing nonlinear signal degradation and fading in a long optical transmission system.

(57) A technique for reducing nonlinear signal degradation and fading over optical transmission systems by simultaneously launching two optical signals of different wavelengths and substantially orthogonal relative polarizations, into the same transmission path. The launched signals, which are collected at the receiving end of the transmission path, have equal optical power levels, and are modulated to carry identical information. Since the two signals are launched into the transmission path with substantially orthogonal polarizations and comparable power levels, the overall transmitted signal is essentially unpolarized. As a result, the impact of any detrimental polarization dependent effects within the transmission system are minimized. In addition, since the launched signals are combined at the receiving end of the transmission path, the power level of each individual signal can be reduced, thereby diminishing the impact of those nonlinear effects which increase as a function of power level.

FIG. 1

EP 0 615 356 A1

## Technical Field

The invention relates to the optical transmission of information and, more particularly, to improving transmission capabilities over very long optical transmission paths.

## Background Of The Invention

Very long optical fiber transmission paths, such as those employed in undersea or transcontinental terrestrial lightwave transmission systems which employ optical amplifier repeaters, are subject to decreased performance due to nonlinearities in the transmission fibers. In addition, these systems are susceptible to signal fading and/or fluctuations in the signal-to-noise ratio ("SNR") which are primarily caused by polarization dependent effects.

Fiber nonlinearities can degrade SNR by enhancing optical noise, or by causing distortion in the transmitted optical waveform. These nonlinear interactions increase as a function of the optical power level, and are dependent upon the relative state of polarization ("SOP") between the signals and the noise. If optical fibers offered a truly linear transmission medium, system performance (as measured by SNR) would improve as optical power was increased. However, the slight nonlinearity of optical fibers places an upper bound upon the level of optical power that can be transmitted -- thereby limiting the performance of any transmission system employing the fibers.

In long optical transmission systems employing amplifiers, the SNR can fluctuate in a random manner. This fluctuation contributes to a phenomenon known as signal fading. Signal fading results in an increased bit error rate ("BER") for digital signals transmitted via the optical fiber path. When the SNR of a digital signal within such a transmission system becomes unacceptably small (resulting in an undesirably high BER), a signal fade is said to have occurred. Experimental evidence has shown that signal fading, and the underlying SNR fluctuations, are caused by a number of polarization dependent effects induced by the optical fiber itself and/or other optical components (e.g., repeaters, amplifiers, etc.) along the transmission path. In particular, polarization dependent BER over long optical fiber paths can be attributed to polarization dependent loss ("PDL"), polarization dependent gain ("PDG"), polarization mode dispersion ("PMD"), and polarization dependent hole-burning ("PDHB"). All of these effects impact signal transmission as a function of the particular SOP of an optical signal being propagated along the path.

Naturally, the SOP of a signal launched into a particular optical transmission path can be adjusted to reduce the effects of PDL, PDG, PMD, and PDHB, and optimize system BER. Unfortunately, since the PDL and PMD characteristics of a given transmission path fluctuate with time and environmental conditions, statically orienting the SOP of a signal to provide optimal BER at any given time proves ineffective, as the optimal polarization angle for the transmission path is bound to shift. A prior solution to this problem has been the use of systems which actively adjust the SOP of a signal launched into a given optical path as a function of the quality of the signal received at the far end of the transmission path. However, the dynamic polarization controllers and extremely long feedback paths employed within such systems increase overall complexity and costs, and reduce reliability.

Another alternative is to employ a non-polarized light source to transmit information over an optical fiber path. A non-polarized light source shares its optical power equally on two orthogonally oriented planes within the fiber, with no phase coherence between the two. Since the nonlinear interactions induced by the fiber are both power and polarization dependent, the non-polarized light source has the potential to reduce the deleterious effects of fiber nonlinearities. Unfortunately, non-polarized light sources produce signals having inherently wide bandwidths. These wide bandwidth signals exhibit poor noise and dispersion characteristics which make them impractical for use over very long transmission paths.

## Summary Of The Invention

The present invention overcomes the deficiencies of prior techniques for reducing nonlinear signal degradation and fading over long optical transmission systems by simultaneously launching two optical signals of different wavelengths and substantially orthogonal relative polarizations, into the same transmission path. The launched signals, which are collected at the receiving end of the transmission path, have equal optical power levels, and are modulated to carry identical information. Since the two signals are launched into the transmission path with substantially orthogonal polarizations and comparable power levels, the overall transmitted signal is essentially unpolarized. As a result, the impact of any detrimental polarization dependent effects within the transmission system is minimized. In addition, since the launched signals are combined at the receiving end of the transmission path, the power level of each individual signal can be reduced, thereby diminishing the impact of those nonlinear effects which increase as a function of power level.

## Brief Description Of The Drawing

In the drawing:
FIG. 1 is a simplified block diagram of an exemplary arrangement, including an optical coupler and an optical modulator, which facilitates the practice of the invention;

FIG. 2 is a simplified block diagram of an exemplary arrangement, including an optical coupler and a single-polarization optical modulator, which facilitates the practice of the invention;

FIG. 3 is a simplified block diagram of an exemplary arrangement, including two optical filters, which facilitates the practice of the invention; and

FIG. 4 is a simplified block diagram of an exemplary arrangement, including a fiber Fabry-Perot filter, which facilitates the practice of the invention.

## Detailed Description Of The Invention

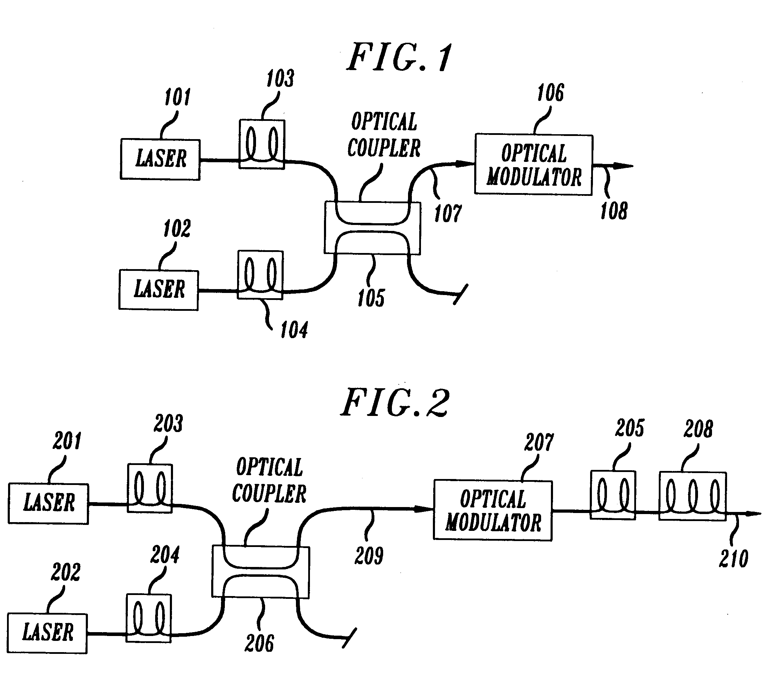

FIG. 1 shows a simplified block diagram of an exemplary arrangement facilitating the practice of the invention. As shown, the arrangement includes lasers 101 and 102, polarization controllers ("PCs") 103 and 104, 3dB optical coupler ("optical coupler") 105, and optical modulator 106. Laser 101 produces a continuous wave ("CW") optical signal having a wavelength of $\lambda_1$ and power level of $P_0$, and laser 102 produces a CW optical signal having a wavelength of $\lambda_2$, and power level of $P_0$. Via separate optical fibers, the output of laser 101 is routed to PC 103, and the output of laser 102 is routed to PC 104. PC 103 and 104 are Lefevre-type polarization controllers, which are well-known in the art (such controllers were described by H.C. Lefevre in IEEE Electronics Letters, Vol. 16, p. 778, 1980). The PCs are adapted to insure that SOP of the $\lambda_1$ optical signal exiting PC 103 is orthogonal with respect to the SOP of the $\lambda_2$ optical signal exiting PC 104.

Each of the orthogonally oriented optical signals is then fed to optical coupler 105 via separate optical fibers. Optical coupler 105 serves to combine the $\lambda_1$ and $\lambda_2$ signals onto single optical fiber 107. As a result of the power levels of the $\lambda_1$ and $\lambda_2$ signals being equal (both are fixed at level $P_0$), the degree of polarization at the output of optical coupler 105 is essentially zero (the combined signal consists of two orthogonally oriented components of equal magnitude). The power level of the combined signal exiting from optical coupler 105 is approximately $P_0$, as a total optical power of $2P_0$ was input to optical coupler 105, and there is a 3dB combining loss associated with the optical coupler ($P_{out}=P_{in}/2$). The non-polarized combined signal is then modulated by optical modulator 106 so that both the $\lambda_1$ and $\lambda_2$ components carry the same data. An example of a type of polarization independent optical modulator which can be employed in practicing the invention is given M. Suzuki, H. Tanaka, Y. Matsushima, "InGaAsP Electroabsorption Modulator for High-Bit Rate EDFA System," IEEE Photonics Technology Letters, Vol. 4, No. 6, June 1992. The modulated signal is routed to a remote receiver via long-haul optical fiber 108. Since the $\lambda_1$ and $\lambda_2$ compo-

nents of the combined signal are orthogonally oriented, the noise associated with one component cannot be preferentially enhanced with respect to the information carried by the other component. Furthermore, because the non-polarized combined signal is created by coupling two highly polarized signals, the poor noise and dispersion characteristics normally associated with non-polarized light sources are avoided.

FIG. 2 shows a simplified block diagram of an arrangement facilitating the practice of a second method of the invention. As shown, the arrangement includes lasers 201 and 202, PCs 203, 204, and 205 (all of which are Lefevre-type polarization controllers), optical coupler 206, single-polarization optical modulator 207, and polarization maintaining fiber ("PMF") 208. Laser 201 produces a CW optical signal having a wavelength of $\lambda_1$ and power level of $P_0$, and laser 202 produces a CW optical signal having a wavelength of $\lambda_2$ and power level of $P_0$. The output of laser 201 is routed to PC 203, and the output of laser 202 is routed to PC 204. The PCs are adjusted to align the SOP of the $\lambda_1$ optical signal, and the SOP of the $\lambda_2$ optical signal with the modulation axis of single-polarization optical modulator 207.

The aligned optical signals output by PCs 203 and 204 are then fed to optical coupler 206, which combines them onto a single optical fiber. This combined $\lambda_1/\lambda_2$ signal is output upon optical fiber 209. As in the first described arrangement, the combined signal exiting from optical coupler 206 has an approximate power level of $P_0$. The combined signal is then modulated by single-polarization optical modulator 207 so that both the $\lambda_1$ and $\lambda_2$ components carry the same data. An example of a type of single-polarization optical modulator which can be employed in practicing the invention is given S.K. Korotky, J.J. Veselka, et al., "High-Speed, Low-Power Optical Modulator with Adjustable Chirp Parameter," 1991 Integrated Photonics Research Conference, Monterey, California. The modulated signal output by single-polarization optical modulator 207 is then routed through PC 205, which aligns the SOPs of the $\lambda_1$ and $\lambda_2$ components so that they are at a 45° with respect to the principal axes of PMF 208.

PMF 208, a conventional polarization maintaining fiber (such as the SM.15-P-8/125-UV/UV-400 fiber available from Fujikara, Ltd. of Tokyo, Japan), is chosen to have a polarization mode dispersion characteristic ($\Delta\tau$) which functions to realign the SOPs of $\lambda_1$ and $\lambda_2$ components of the combined signal so that they are orthogonal to one another. This polarization mode characteristic required to insure that the components exit the PMF with orthogonal SOPs is computed as follows:

$$\Delta\tau = \frac{1}{\frac{2C}{\lambda_c{}^2}|\lambda_1 - \lambda_2|} \; ;$$

where c is the speed of light, and $\lambda_c$ is equal to

$(\lambda_1+\lambda_2)/2$. For example, if $\lambda_1$ was 1557.9 nm, and $\lambda_2$ was 1558.1 nm, the above equation would yield a differential delay (due to polarization mode dispersion) of approximately 20 psec. The signal output from PMF 208 is then routed to a remote receiver via long-haul optical fiber 210. As in the first described arrangement, the orthogonal orientation of the $\lambda_1$ and $\lambda_2$ components of the signal prevents the noise associated with one component from being preferentially enhanced with respect to the information carried by the other component.

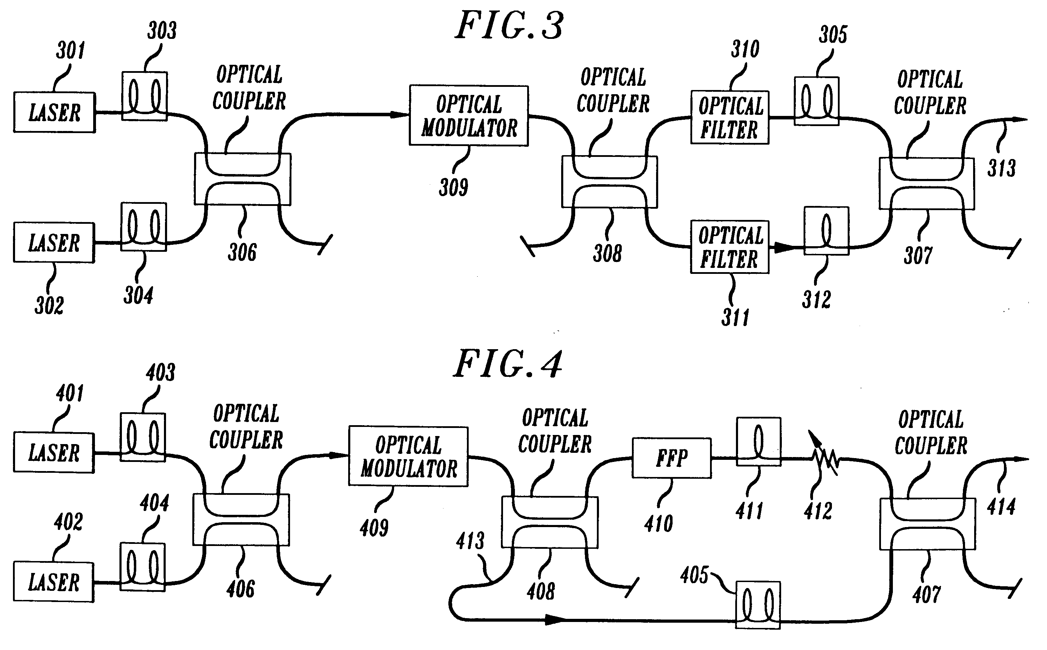

A third method of the invention may be practiced using the optical arrangement shown in FIG. 3. This arrangement includes lasers 301 and 302, Lefevre-type PCs 303, 304, and 305, optical couplers 306 and 307, 3dB optical splitter ("optical splitter") 308, single-polarization optical modulator 309, optical filters 310 and 311, and optical delay 312. Laser 301 produces an optical signal of power level of $P_0$ at wavelength $\lambda_1$ at, and laser 302 produces an optical signal at power level $P_0$ at wavelength $\lambda_2$. The output of laser 301 is routed to PC 303, and the output of laser 302 is routed to PC 304. As in the previously described arrangement, these PCs are adapted to align the SOPs of the optical signals with the modulation axis of single-polarization optical modulator 309.

The aligned optical signals output by PCs 303 and 304 are fed to optical coupler 306, where they are combined into a single optical signal which is output to single-polarization optical modulator 309. Single-polarization optical modulator 309 modulates the same data upon the $\lambda_1$ and $\lambda_2$ components of the combined optical signal. The modulated signal is then routed to optical splitter 308. Optical splitter 308 divides the modulated signal into two separate signals, each of which contains a $\lambda_1$ and $\lambda_2$ component signal. One of these divided signals is routed to optical filter 310, which is tuned to pass the $\lambda_1$ component signal. Similarly, the other divided signal is routed to optical filter 311, which is tuned to pass the $\lambda_2$ component signal. The filtered $\lambda_1$ component output by optical filter 310 is routed through PC 305, which aligns the SOP of that component so it is orthogonal to the SOP of $\lambda_2$ component. The aligned $\lambda_1$ component signal output by PC 305 is then routed to optical coupler 307. Meanwhile, the $\lambda_2$ component signal passed by optical filter 311 is routed through optical delay 312, so that both it and the $\lambda_1$ component signal arrive at optical coupler 307 coincidentally. Optical coupler 307 combines the two components into a single optical signal which is routed to a remote receiver via long-haul optical fiber 313. As in the previously described arrangements, the orthogonal orientation of the $\lambda_1$ and $\lambda_2$ components of the combined signal prevents the noise associated with one component from being preferentially enhanced with respect to the information carried by the other component.

FIG. 4 shows a block diagram of yet another optical arrangement which may be utilized to practice a method of the invention. This arrangement includes lasers 401 and 402, Lefevre-type PCs 403, 404, and 405, optical couplers 406 and 407, optical splitter 408, single-polarization optical modulator 409, fiber Fabry-Perot filter ("FFP") 410, optical delay 411, and optical attenuator 412. This arrangement operates in a manner similar to the arrangement shown in FIG. 3 to produce a modulated combined signal, having a $\lambda_1$ component and a $\lambda_2$ component, at the output of single-polarization optical modulator 409.

This output signal is routed through optical splitter 408 to FFP 410 (note that optical splitter 408 is a directional splitter which is oriented so that no coupling occurs between the combined signal and optical splitter output line 413). 410 passes the $\lambda_1$ component of the signal, and rejects the $\lambda_2$ component. The rejected $\lambda_2$ component returns to optical splitter 408 where it is coupled to output line 413 and passed to PC 405. PC 405 aligns the SOP of the $\lambda_2$ component so it is orthogonal to the SOP of $\lambda_1$ component that was passed by FFP 410. The $\lambda_2$ component signal is then input to optical coupler 407. Meanwhile, the $\lambda_1$ component signal passed by FFP 410 is routed through optical delay 411, so that both it and the $\lambda_2$ component signal arrive at optical coupler 407 coincidentally. Optical attenuator 412 is adjusted to equalize the power of the $\lambda_1$ component signal with that of the $\lambda_2$ component signal. This is power equalization is required because the $\lambda_2$ component signal (rejected by FFP 410) is attenuated as it is coupled to output line 413 by optical splitter 408. Optical coupler 407 then combines the two components into a single optical signal which is routed to a remote receiver via long-haul optical fiber 414. Note that optical attenuator 412 could be eliminated if the power level of laser 402 were increased to compensate for the additional losses which the $\lambda_2$ component signal is subjected to.

In all of the above described embodiments, to insure that the bandwidth of the data carried by the $\lambda_1$ optical signal does not overlap with the bandwidth of the data carried by the $\lambda 2$ optical signal, it may be advantageous to separate the wavelengths of the $\lambda_1$ and $\lambda_2$ optical signals so that:

$$|\lambda_1 - \lambda_2| > \frac{\lambda_c^2 R_B}{c};$$

where c is the speed of light, $\lambda_c$ is equal to $(\lambda_1+\lambda_2)/2$, and $R_B$ is the bit rate of the data carried by the $\lambda_1$ and $\lambda_2$ optical signals.

Various modifications could be made by those skilled in the art without departing from the scope of the present invention. One modification would include separately modulating the $\lambda_1$ and $\lambda_2$ optical signals with data prior to combining them onto a single optical fiber. Another modification would involve aligning the relative SOPs of $\lambda_1$ and $\lambda_2$ optical signals so that one was oriented between 80° and 100° of the other (substantially, but not exactly, orthogonal with respect to one another).

## Claims

1. A method for reducing nonlinear signal degradation and fading within an optical transmission system, comprising the steps of:

   generating a first optical signal having a wavelength of $\lambda_1$ and a fixed state of polarization;

   generating a second optical signal having a wavelength of $\lambda_2$ and a fixed state of polarization which is substantially orthogonal with respect to that of said first generated optical signal;

   combining said first and said second optical signals into a single optical signal having a low degree of polarization, said single optical signal being comprised of a first signal component of wavelength $\lambda_1$, and a second signal component of wavelength $\lambda_2$, wherein the state of polarization of said first signal component is substantially orthogonal with respect to the state of polarization of said second signal component;

   modulating said first and said second signal components of said single optical signal so that each of said signal components carries substantially identical information; and

   launching said modulated single optical signal into an optical transmission media.

2. A method for reducing nonlinear signal degradation and fading within an optical transmission system, comprising the steps of:

   generating a first optical signal having a wavelength of $\lambda_1$ and a fixed state of polarization;

   generating a second optical signal having a wavelength of $\lambda_2$ and a fixed state of polarization which is substantially orthogonal with respect to that of said first generated optical signal;

   simultaneously modulating said first optical signal and said second optical signal with substantially identical information;

   combining said first and said second modulated optical signals into a single optical signal having a low degree of polarization, said single optical signal being comprised of a first signal component of wavelength $\lambda_1$ and a second signal component of wavelength $\lambda_2$, wherein the state of polarization of said first signal component is substantially orthogonal with respect to the state of polarization of said second signal component; and

   launching said single optical signal into an optical transmission media.

3. A method for reducing nonlinear signal degradation and fading within an optical transmission system, comprising the steps of:

   generating a first optical signal having a wavelength of $\lambda_1$;

   generating a second optical signal having a wavelength of $\lambda_2$;

   combining said first and said second optical signals into a single optical signal having a first signal component of wavelength $\lambda_1$, and a second signal component of wavelength $\lambda_2$;

   modulating said first and said second signal components of said single optical signal so that each of said signal components carries substantially identical information;

   aligning the state of polarization of said first signal component to be substantially orthogonal to the state of polarization of said second signal component, thereby lowering the degree of polarization of said single optical signal; and

   launching said single optical signal into an optical transmission media.

4. A method for reducing nonlinear signal degradation and fading within an optical transmission system, comprising the steps of:

   generating a first optical signal having a wavelength of $\lambda_1$;

   generating a second optical signal having a wavelength of $\lambda_2$;

   combining said first and said second optical signals into a single optical signal having a first signal component of wavelength $\lambda_1$, and a second signal component of wavelength $\lambda_2$;

   modulating said first and said second signal components of said single optical signal so that each of said signal components carries substantially identical information;

   filtering said single optical signal to separate said first modulated signal component signal of wavelength $\lambda_1$ and said second modulated signal component signal of wavelength $\lambda_2$;

   aligning the state of polarization of said separated first modulated signal component signal to be substantially orthogonal to the state of polarization of said separated second modulated signal component signal;

   combining said separated first and said second modulated signal component signals into a single optical signal having a low degree of polarization, said single optical signal being comprised of a first modulated signal component of wavelength $\lambda_1$ and a second modulated signal component of wavelength $\lambda_2$, wherein the state of polarization of said first modulated signal component is substantially orthogonal with respect to the state of polarization of said second modulated signal component; and

   launching said single optical signal into an optical transmission media.

5. A method for reducing nonlinear signal degradation and fading within an optical transmission system, comprising the steps of:

generating a first optical signal having a wavelength of $\lambda_1$;

generating a second optical signal having a wavelength of $\lambda_2$;

simultaneously modulating said first optical signal and said second optical signal with substantially identical information;

combining said first and said second modulated optical signals into a single optical signal having a first signal component of wavelength $\lambda_1$, and a second signal component of wavelength $\lambda_2$;

aligning the state of polarization of said first signal component to be substantially orthogonal to the state of polarization of said second signal component, thereby lowering the degree of polarization of said single optical signal; and

launching said single optical signal into an optical transmission media.

6. Apparatus for launching an optical signal exhibiting reduced nonlinear signal degradation and fading into an optical transmission system, comprising:

a first optical source, adapted to generate an optical signal having a wavelength of $\lambda_1$ and a fixed state of polarization;

a second optical source, adapted to generate an optical signal having a wavelength of $\lambda_2$ and a fixed state of polarization which is substantially orthogonal with respect to that of said first generated optical signal;

means for combining said optical signal having a wavelength of $\lambda_1$ and said optical signal having a wavelength of $\lambda_2$ into a single optical signal having a low degree of polarization, said single optical signal being comprised of a first signal component of wavelength $\lambda_1$, and a second signal component of wavelength $\lambda_2$, wherein the state of polarization of said first signal component is substantially orthogonal with respect to the state of polarization of said second signal component;

optical modulator means adapted to encode said first and said second signal components of said single optical signal so that each of said signal components carries substantially identical information; and

optical launching means adapted to couple said modulated single optical signal to an optical transmission media.

7. Apparatus for launching an optical signal exhibiting reduced nonlinear signal degradation and fading into an optical transmission system, comprising:

a first optical source, adapted to generate an optical signal having a wavelength of $\lambda_1$ and a fixed state of polarization;

a second optical source, adapted to generate an optical signal having a wavelength of $\lambda_2$ and a fixed state of polarization which is substantially orthogonal with respect to that of said first generated optical signal;

optical modulator means adapted to simultaneously encode said optical signals generated by said first and said second optical sources so that each of said optical signals carries substantially identical information;

means for combining said encoded optical signals into a single optical signal having a low degree of polarization, said single optical signal being comprised of a first signal component of wavelength $\lambda_1$ and a second signal component of wavelength $\lambda_2$, wherein the state of polarization of said first signal component is substantially orthogonal with respect to the state of polarization of said second signal component; and

optical launching means adapted to couple said single optical signal to an optical transmission media.

8. Apparatus for launching an optical signal exhibiting reduced nonlinear signal degradation and fading into an optical transmission system, comprising:

a first optical source, adapted to generate an optical signal having a wavelength of $\lambda_1$;

a second optical source, adapted to generate an optical signal having a wavelength of $\lambda_2$;

means for combining said optical signal having a wavelength of $\lambda_1$ and said optical signal having a wavelength of $\lambda_2$ into a single optical signal, said single optical signal being comprised of a first signal component of wavelength $\lambda_1$, and a second signal component of wavelength $\lambda_2$;

optical modulator means adapted to encode said first and said second signal components of said single optical signal so that each of said signal components carries substantially identical information;

means for aligning the state of polarization of said encoded first signal component to be substantially orthogonal to the state of polarization of said encoded second signal component; and

optical launching means adapted to couple said single optical signal to an optical transmission media.

9. Apparatus for launching an optical signal exhibiting reduced nonlinear signal degradation and fading into an optical transmission system, comprising:

a first optical source, adapted to generate an optical signal having a wavelength of $\lambda_1$;

a second optical source, adapted to generate an optical signal having a wavelength of $\lambda_2$;

means for combining said optical signal having a wavelength of $\lambda_1$ and said optical signal having a wavelength of $\lambda_2$ into a single optical signal, said single optical signal being comprised of a first signal component of wavelength $\lambda_1$, and a second signal component of wavelength $\lambda_2$;

optical modulator means adapted to encode said first and said second signal components of said single optical signal so that each of said signal components carries substantially identical information;

optical filtering means adapted to separate said first encoded signal component signal of wavelength $\lambda_1$ and said second encoded signal component signal of wavelength $\lambda_2$;

means for aligning the state of polarization of said first encoded signal component to be substantially orthogonal to the state of polarization of said second encoded signal component;

means for combining said encoded signal components into a single optical signal having a low degree of polarization, said single optical signal being comprised of a first signal component of wavelength $\lambda_1$ and a second signal component of wavelength $\lambda_2$, wherein the state of polarization of said first signal component is substantially orthogonal with respect to the state of polarization of said second signal component; and

optical launching means adapted to couple said single optical signal to an optical transmission media.

10. The apparatus of claim 9 wherein said optical filtering means includes an optical bandpass filter.

11. The apparatus of claim 9 wherein said optical filtering means includes a Fabry-Perot filter.

12. Apparatus for launching an optical signal exhibiting reduced nonlinear signal degradation and fading into an optical transmission system, comprising:

a first optical source, adapted to generate an optical signal having a wavelength of $\lambda_1$;

a second optical source, adapted to generate an optical signal having a wavelength of $\lambda_2$;

optical modulator means adapted to simultaneously encode said optical signals generated by said first and said second optical sources so that each of said optical signals carries substantially identical information;

means for combining said encoded optical signals into a single optical signal, said single optical signal being comprised of a first encoded signal component of wavelength $\lambda_1$ and a second en-

coded signal component of wavelength $\lambda_2$;

means for aligning the state of polarization of said first encoded signal component to be substantially orthogonal to the state of polarization of said second encoded signal component; and

optical launching means adapted to couple said single optical signal to an optical transmission media.

13. A method for reducing nonlinear signal degradation and fading within an optical transmission system, comprising the step of:

simultaneously launching two optical signals of different wavelengths having substantially orthogonal relative polarizations and carrying substantially identical mation into the same transmission path.

FIG. 1

FIG. 2

## FIG.3

LASER 301 — 303
LASER 302 — 304
OPTICAL COUPLER 306
OPTICAL MODULATOR 309
OPTICAL COUPLER 308
OPTICAL FILTER 310 — 305
OPTICAL FILTER 311 — 312
OPTICAL COUPLER 307 — 313

## FIG.4

LASER 401 — 403
LASER 402 — 404
OPTICAL COUPLER 406
OPTICAL MODULATOR 409
OPTICAL COUPLER 408
FFP 410 — 411 — 412
413
405
OPTICAL COUPLER 407 — 414

EP 0 615 356 A1

European Patent
Office

**EUROPEAN SEARCH REPORT**

Application Number
EP 94 30 1496

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 337 644 (BRITISH TELECOMMUNICATIONS) | 1-3,5-8, 12,13 | H04B10/12 H04B10/14 |
| Y | * column 1, line 46 - line 51 * <br> * column 2, line 26 - line 38 * <br> * column 7, line 39 - line 50 * <br> * abstract; figures 2,5,7 * | 4,9 | |
| Y | PATENT ABSTRACTS OF JAPAN vol. 16, no. 451 (P-1424) 18 September 1992 & JP-A-04 158 266 (HITACHI) | 4,9 | |
| A | * abstract * | 1-3,5-8, 10,12,13 | |
| A | EP-A-0 529 240 (CSELT) <br><br> * abstract; claim 1; figure 1 * <br> * column 4, line 19 - line 40 * | 1-3,5-8, 12,13 | |
| A | OPTICS LETTERS., vol.16, no.6, 15 March 1991, NEW YORK US pages 381 - 383 W.K.BURNS ET AL 'Depolarized source for fiber-optic applications' * page 383, right column, paragraph 2; figure 1 * | 1-3,5-8, 12,13 | **TECHNICAL FIELDS SEARCHED** (Int.Cl.5) <br><br> H04B |
| A | EP-A-0 445 943 (ATT) <br><br> * page 3, line 43 - page 4, line 1; figure 1 * | 1-3,5-8, 12,13 | |

The present search report has been drawn up for all claims

| Place of search | Date of completion of the search | Examiner |
|---|---|---|
| THE HAGUE | 19 May 1994 | Goudelis, M |

EPO FORM 1503 03.82 (P04C01)